# EUROPEAN PATENT APPLICATION

(11) **EP 4 696 192 A1**
(43) Date of publication of application: **18.02.2026**
(21) Application number: 24787822.6
(22) Date of filing: 27.02.2024
(51) Int. Cl.: A46B 13/04

(54) **HANDHELD ELECTRIC CLEANING BRUSH WITH TWO NESTED BRUSH HEADS ROTATING OPPOSITELY**

(30) Priority: 11.04.2023 CN 202310379024
(71) Applicant: Beijing Lvsan Technology Co., Ltd., Beijing 100094 (CN)
(72) Inventor: WEI, Jianhua, Beijing 100094 (CN); WEI, Jie, Beijing 100094 (CN); MA, Jie, Beijing 100094 (CN); TAO, Yan, Beijing 100094 (CN); ZHANG, Mingxuan, Beijing 100094 (CN); XU, Peipei, Beijing 100094 (CN); LI, Jinlong, Beijing 100094 (CN); FENG, Haitao, Beijing 100094 (CN)
(74) Representative: RCD-Patent Giesen, Schmelcher & Griebel Patentanwälte PartG mbB
(86) International application number: PCT/CN2024/078713
(87) International publication number: WO 2024/212716

(57) **Abstract**

A handheld electric cleaning brush with two nested brush heads rotating oppositely, comprising: a cylindrical shell and brush heads, wherein the brush heads are arranged at a front end of the cylindrical shell, and a handle is arranged on a side wall of the cylindrical shell. The brush heads comprise an inner brush head and an outer brush head. Two nested rotating shafts are arranged in the cylindrical shell, the two brush heads are nested spaced apart from each other and are replaceably snap-fitted into front ends of the two nested rotating shafts, respectively, and the two nested rotating shafts are an inner rotating shaft and an outer rotating shaft, respectively. One driving device drives the two rotating shafts to rotate oppositely so as to drive the two brush heads to rotate oppositely. The inner rotating shaft is sleeved on a central shaft arranged in the cylindrical shell. A cleaning agent channel is provided in the central shaft, and a cleaning agent fed from a cleaning agent tank is pumped into the cleaning agent channel by means of a liquid transfer pump, and is fed into the inner brush head from a front end of the central shaft.

## Description

### Technical Field

The present application relates to a handheld electric cleaning brush with two nested brush heads rotating oppositely.

### Background Art

In daily life, people frequently perform cleaning work, and special cleaning solution is most commonly used in combination with brushes and scouring pads. There are many kinds of dirt that need to be cleaned in the household, and the dirt is attached to the surface of various materials and distributed in various positions, and the cleaning work is time-consuming and laborious. In order to save manpower, many people opt for electric brushes to clean areas with heavy-duty grease deposits such as gas stoves and range hoods, as well as areas with large surfaces such as tiles, floors and glass. Cleaning process: first, spray the cleaning solution on the surface to be cleaned: after the cleaning solution contacts the stain, the surfactants, emulsifiers, penetrants, etc. penetrate into the interior of the stain, and decompose and peel off the stain; the surface to be cleaned is then cleaned by pressing with an electric brush having bristles, a scouring pad or a sponge head. The operator is not required to exert too much force, and the mechanical force of the motor cooperates with the cleaning solution to enhance efficiency, so that the cleaning work can be completed quickly. However, consumers have found some problems during the use of the electric brush: first, the cleaning solution and the electric brush are two separate articles, which need to be taken separately, and are not convenient to use. Second, the cleaning solution and dissolved stains on the surface to be cleaned splash around as the brush head rotates, contaminating nearby articles and the user's clothing. Third, when the brush head rotates rapidly, it will deviate along the tangential direction of rotation, which is difficult to control and requires the operator to apply force to control, thus deviating from the original intention of using the electric brush to save effort. Currently, the commercially available electric brushes have some solutions to these problems: as for the first problem, there is no solution yet. As for the second problem, a sponge brush or a scouring pad made of a composite sponge material is used to replace a bristle brush for cleaning, and this method can solve the problem of the cleaning solution splashing; however, the cleaning force of the material of the brush head for narrow spaces, heavy-duty grease deposits and uneven surfaces is greatly reduced; in addition, the absorbent material increases the amount of cleaning solution to be used, and the brush head of such material has a high frictional force when it contacts the surface to be cleaned, so that the user is required to apply more force to control the brush head, and the third problem of difficulty in operation is more prominent. Some manufacturers have reduced the rotational speed of the electric brushes to address the issues of cleaning solution splashing and deviation. However, this method brings about the problem of a decline in cleaning capacity.

### Summary of the Invention

It is an object of the present application to provide a handheld electric cleaning brush with two nested brush heads rotating oppositely. By providing two nested brush heads, and controlling the rotation of the two brush heads in different directions by a driving device, the present application overcomes the problems of the prior art in which a single brush head rotates to splash the cleaning solution and dissolved stains around and contaminate nearby articles and the user's clothing.

In order to achieve the above-mentioned object, the technical solution of the present application is as follows.

A handheld electric cleaning brush with two nested brush heads rotating oppositely, includes a cylindrical shell and brush heads, wherein the brush heads are arranged at a front end of the cylindrical shell, and a handle is arranged on a side wall of the cylindrical shell; the brush heads include an inner brush head and an outer brush head; two nested rotating shafts are arranged in the cylindrical shell; the two brush heads are nested spaced apart from each other and are replaceably snap-fitted into front ends of the two nested rotating shafts, respectively; and the two nested rotating shafts are an inner rotating shaft and an outer rotating shaft, respectively; one driving device drives the two rotating shafts to rotate oppositely so as to drive the two brush heads to rotate oppositely; the inner rotating shaft is sleeved on a central shaft arranged in the cylindrical shell; a cleaning agent channel is provided in the central shaft, and a cleaning agent fed from a cleaning agent tank is pumped into the cleaning agent channel by means of a liquid transfer pump, and is fed into the inner brush head from a front end of the central shaft.

A further scheme is that: the driving device includes a driving motor, a first gear, a second gear, a third gear and a reversing gear; the driving motor is fixed in a cylindrical shell, a positioning partition is arranged in a middle of the cylindrical shell, the central shaft is arranged in a center of the positioning partition; a first gear is sleeved on a rotating shaft of the driving motor and extends out from the positioning partition; a second gear is arranged at a rear end of the inner rotating shaft; a third gear is arranged at a rear end of the outer rotating shaft; the first gear and the second gear directly engage to drive the inner rotating shaft to rotate in one direction; a reversing gear is provided between the first gear and the third gear, and the first gear drives the third gear via the reversing gear to drive the outer rotating shaft to rotate in a reverse direction opposite to the direction of rotation of the inner rotating shaft.

A further scheme is that: a rotational speed of the outer brush head is lower than a rotational speed of the inner brush head.

A further scheme is that: the rotational speed of the outer brush head is lower than the rotational speed of the inner brush head but not exceeding half of the rotational speed of the inner brush head.

A further scheme is that: an interval between the inner brush head and the outer brush head is 5 mm to 10 mm, and a brush face of the inner brush head is 1 mm to 2 mm higher than a brush face of the outer brush head.

A further scheme is that: the cleaning agent tank is arranged at a rear end of the cylindrical shell, both end side surfaces of the cleaning agent tank are respectively provided with liquid outlet ports, the liquid outlet ports at the front and rear ends are respectively provided with liquid transfer pumps, and an output of the liquid transfer pump is connected to the cleaning agent channel provided on the central shaft via a pipeline.

A further scheme is that: a driving circuit of the driving device is provided in the handle, the driving circuit containing a control circuit for the liquid transfer pump, and a replaceable battery module is connected and provided at a lower end of the handle.

A further scheme is that: the outer brush head encloses a side surface and an upper flat surface of the inner brush head in an "L" shape by a base plate.

Advantageous effects of the present application are as follows. By providing two nested brush heads, and controlling the rotation of the two brush heads in different directions by a driving device, the present application overcomes the problems of the prior art in which a single brush head rotates to splash the cleaning solution and dissolved stains around and contaminate nearby articles and the user's clothing. At the same time, the rotation of the outer brush head improves the freedom of selection of the brush head and improves the cleaning efficiency. By using two ends to discharge liquid in the cleaning agent tank, it is ensured that at least one feed liquid port can draw liquid from the cleaning agent tank whether the cleaning agent tank is in an upright position or in an inverted position.

Hereinafter, the present application will be described in detail with reference to the accompanying drawings and embodiments.

### Brief Description of the Drawings

Fig. 1 is a schematic diagram of a structure of the present application;

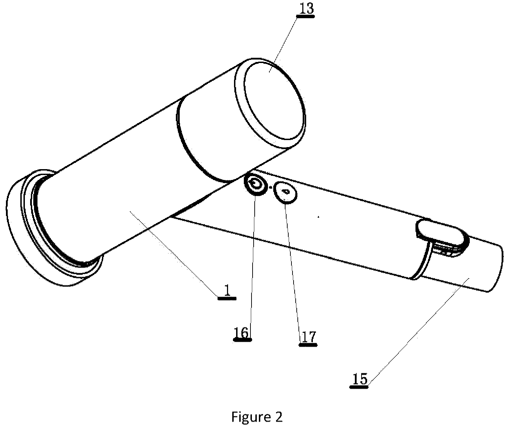

Fig. 2 is a schematic diagram of a configuration of the present application.

### Detailed Description of the Invention

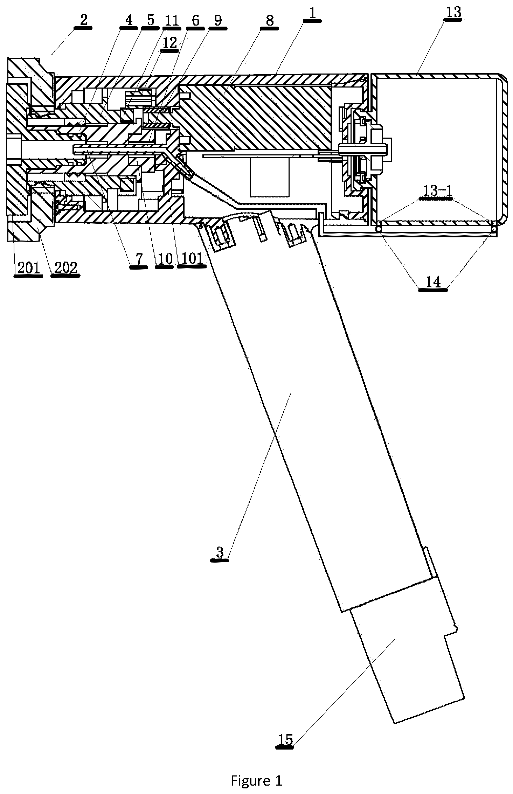

A handheld electric cleaning brush with two nested brush heads rotating oppositely, as shown in Fig. 1, the handheld electric cleaning brush includes a cylindrical shell 1 and brush heads 2, wherein the brush heads 2 are arranged at a front end of the cylindrical shell 1, and a handle 3 is arranged on a side wall of the cylindrical shell. In order to overcome the problem of the cleaning solution and dissolved stains splashing around as the brush head rotates, the brush heads include an inner brush head 201 and an outer brush head 202; two nested rotating shafts are arranged in the cylindrical shell 1, and the two nested rotating shafts are an inner rotating shaft 4 and an outer rotating shaft 5, respectively; the two brush heads are nested spaced apart from each other and are replaceably snap-fitted into front ends of the two nested rotating shafts, respectively; the inner brush head 201 is snap-fitted into the inner rotating shaft 4 from the inner side of the front end of the inner rotating shaft 4, and the outer brush head 202 is snap-fitted into the outer rotating shaft 5 from the outer side of the front end of the inner rotating shaft 4; one driving device drives the two rotating shafts to rotate oppositely so as to drive the two brush heads to rotate oppositely; the inner rotating shaft is sleeved on a central shaft 6 arranged in the cylindrical shell; a cleaning agent channel 7 is provided in the central shaft 6, and a cleaning agent fed from a cleaning agent tank is pumped into the cleaning agent channel 7 by means of a liquid transfer pump, and is fed into the inner brush head 201 from a front end of the central shaft 6.

Wherein the driving device includes a driving motor 8, a first gear 9, a second gear 10, a third gear 11 and a reversing gear 12; the driving motor is fixed in a cylindrical shell, a positioning partition 101 is arranged in a middle of the cylindrical shell, the central shaft 6 is arranged in a center of the positioning partition 101; a first gear 9 is sleeved on a rotating shaft of the driving motor 8 and extends out from the positioning partition 101; a second gear 10 is arranged at a rear end of the inner rotating shaft 4; a third gear 11 is arranged at a rear end of the outer rotating shaft 5; the first gear 9 and the second gear 10 directly engage to drive the inner rotating shaft 4 to rotate in one direction; a reversing gear 12 is provided between the first gear 9 and the third gear 11, and the first gear 9 drives the third gear 11 via the reversing gear 12 to drive the outer rotating shaft 5 to rotate in a reverse direction opposite to the direction of rotation of the inner rotating shaft 4. A rotational speed of the outer brush head may be selected to be higher than a rotational speed of the inner brush head by changing the rotational speed ratio design of the gear in order to improve the effect of blocking the stain from splashing around, but to accelerate the wear of the parts. In this embodiment, a rotational speed of the outer brush head is lower than a rotational speed of the inner brush head in order to reduce wear. The chosen scheme which can ensure the improvement of blocking the stain from splashing around and achieve the best cleaning effect is that: the rotational speed of the outer brush head is lower than the rotational speed of the inner brush head but not exceeding half of the rotational speed of the inner brush head. Furthermore, an interval between the inner brush head 201 and the outer brush head 202 is 5 mm to 10 mm, and a brush face of the inner brush head 201 is 1 mm to 2 mm higher than a brush face of the outer brush head 202, and the inner brush head 201 and the outer brush head 202 are made of different materials, and the hardness of the inner brush head 201 is greater than the hardness of the outer brush head 202. The outer brush head encloses a side surface and an upper flat surface of the inner brush head in an "L" shape by a base plate.

The cleaning agent tank 13 may be a separate tank body, which is carried on the operator to introduce the cleaning agent via a pipeline during use, but this is not convenient in use. In this embodiment, the cleaning agent tank 13 is arranged at a rear end of the cylindrical shell 1. In order to ensure that the cleaning agent in the cleaning agent tank 13 can be sucked out when the cleaning brush is used horizontally, downward or upward, both end side surfaces of the cleaning agent tank 13 are respectively provided with liquid outlet ports 13-1; the liquid outlet ports 13-1 are closely attached to the end surfaces at both ends and at the front and rear ends are respectively provided with liquid transfer pumps 14; an output of the liquid transfer pump is connected to the cleaning agent channel 7 provided on the central shaft via a pipeline; and of course, the cleaning agent tank 13 is provided with a liquid inlet port, which is not shown in the figure.

In this embodiment: a driving circuit of the driving device is provided in the handle, the driving circuit containing a control circuit for the liquid transfer pump, and a replaceable battery module 15 is connected and provided at a lower end of the handle, and a power switch 16 and a speed regulating button 17 are arranged on the handle.

According to the above-mentioned embodiment of the handheld electric cleaning brush with two nested brush heads rotating oppositely, by providing two nested brush heads, and controlling the rotation of the two brush heads in different directions by a driving device, the present application overcomes the problems of the prior art in which a single brush head rotates to splash the cleaning solution and dissolved stains around and contaminate nearby articles and the user's clothing. At the same time, the rotation of the outer brush head improves the freedom of selection of a hardness of the brush head and improves the cleaning efficiency. By using two ends to discharge liquid in the cleaning agent tank, it is ensured that at least one feed liquid port can draw liquid from the cleaning agent tank whether the cleaning agent tank is in an upright position or in an inverted position.

## Claims

1. A handheld electric cleaning brush with two nested brush heads rotating oppositely, comprising a cylindrical shell and brush heads, wherein the brush heads are arranged at a front end of the cylindrical shell, and a handle is arranged on a side wall of the cylindrical shell; the brush heads comprise an inner brush head and an outer brush head; two nested rotating shafts are arranged in the cylindrical shell; the two brush heads are nested spaced apart from each other and are replaceably snap-fitted into front ends of the two nested rotating shafts, respectively; and the two nested rotating shafts are an inner rotating shaft and an outer rotating shaft, respectively; one driving device drives the two rotating shafts to rotate oppositely so as to drive the two brush heads to rotate oppositely; the inner rotating shaft is sleeved on a central shaft arranged in the cylindrical shell; a cleaning agent channel is provided in the central shaft, and a cleaning agent fed from a cleaning agent tank is pumped into the cleaning agent channel by means of a liquid transfer pump, and is fed into the inner brush head from a front end of the central shaft.

2. The handheld electric cleaning brush of claim 1, wherein the driving device comprises a driving motor, a first gear, a second gear, a third gear and a reversing gear; the driving motor is fixed in a cylindrical shell, a positioning partition is arranged in a middle of the cylindrical shell, the central shaft is arranged in a center of the positioning partition; a first gear is sleeved on a rotating shaft of the driving motor and extends out from the positioning partition; a second gear is arranged at a rear end of the inner rotating shaft; a third gear is arranged at a rear end of the outer rotating shaft; the first gear and the second gear directly engage to drive the inner rotating shaft to rotate in one direction; a reversing gear is provided between the first gear and the third gear, and the first gear drives the third gear via the reversing gear to drive the outer rotating shaft to rotate in a reverse direction opposite to the direction of rotation of the inner rotating shaft.

3. The handheld electric cleaning brush of claim 1, wherein a rotational speed of the outer brush head is lower than a rotational speed of the inner brush head.

4. The handheld electric cleaning brush of claim 3, wherein the rotational speed of the outer brush head is lower than the rotational speed of the inner brush head but not exceeding half of the rotational speed of the inner brush head.

5. The handheld electric cleaning brush of claim 1, wherein an interval between the inner brush head and the outer brush head is 5 mm to 10 mm, and a brush face of the inner brush head is 1 mm to 2 mm higher than a brush face of the outer brush head.

6. The handheld electric cleaning brush of claim 1, wherein the cleaning agent tank is arranged at a rear end of the cylindrical shell, both end side surfaces of the cleaning agent tank are respectively provided with liquid outlet ports, the liquid outlet ports at the front and rear ends are respectively provided with liquid transfer pumps, and an output of the liquid transfer pump is connected to the cleaning agent channel provided on the central shaft via a pipeline.

7. The handheld electric cleaning brush of claim 1, wherein a driving circuit of the driving device is provided in the handle, the driving circuit containing a control circuit for the liquid transfer pump, and a replaceable battery module is connected and provided at a lower end of the handle.

8. The handheld electric cleaning brush of claim 1, wherein the outer brush head encloses a side surface and an upper flat surface of the inner brush head in an "L" shape by a base plate.
